# EUROPÄISCHE PATENTANMELDUNG

(11) **EP 4 718 235 A1**
(43) Veröffentlichungstag der Anmeldung: **01.04.2026**
(21) Anmeldenummer: 25200747.1
(22) Anmeldetag: 08.09.2025
(51) Int. Cl.: G06F 8/41, G06F 8/72, G06N 3/02, G06N 20/00

(54) **VERFAHREN ZUM TRANSFORMIEREN EINES CODES DURCH EIN SPRACHMODELL**

(30) Priorität: 30.09.2024 DE 102024209514
(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Leinberger, Martin, 56073 Koblenz (DE); Flexeder, Andrea, 71729 Erdmannhausen (DE); Hecking-Harbusch, Jesko, 71229 Leonberg (DE)

(57) **Zusammenfassung**

Die Erfindung betrifft ein Verfahren (100) zum Transformieren eines Codes durch ein Sprachmodell (50), umfassend die nachfolgenden Schritte:
- Extrahieren (101) eines zu transformierenden Codeausschnittes aus einem Code,
- Transformieren (102) des extrahierten Codeausschnittes durch das Sprachmodell (50),
- Prüfen (103) des transformierten Codeausschnittes auf Basis wenigstens einer definierten Anforderung,
- Integrieren (104) des transformierten Codeausschnittes in den Code, wenn ein Ergebnis des Prüfens (103) indiziert, dass die wenigstens eine definierte Anforderung erfüllt wird.

Ferner betrifft die Erfindung ein Computerprogramm, eine Vorrichtung sowie ein Speichermedium zu diesem Zweck.

## Beschreibung

Die Erfindung betrifft ein Verfahren zum Transformieren eines Codes durch ein Sprachmodell. Ferner betrifft die Erfindung ein Computerprogramm, eine Vorrichtung sowie ein Speichermedium zu diesem Zweck.

### Stand der Technik

Sprachmodelle (englisch: "Large Language Models", LLMs) können mittels entsprechender Textaufforderungen (englisch: "Prompts") Aufgaben auf bestehendem Programmcode durchführen. Zum Beispiel kann Code verbessert, Fehler behoben, oder von einer Programmiersprache in eine andere Programmiersprache übersetzt werden. Allerdings sind die Ergebnisse, die das LLM liefert, häufig nicht korrekt oder entsprechen nicht gewünschten Qualitätskriterien (Stichwort Halluzination). Beispielsweise soll ein Refactoring die Qualität eines Codekonstrukts (z.B. hinsichtlich einer Lesbarkeit oder Wartbarkeit) verbessern unter Beibehaltung des Verhaltens. Lässt man Refactoring von einem LLM durchführen, so verändert sich aber häufig das Verhalten - so dass es kein Refactoring mehr ist. Auf diese Art werden unter Umständen subtile Fehler eingebaut, die später zu Problemen führen und aufwendig wieder korrigiert werden müssen. Solche unkorrekten Ergebnisse liefert ein LLM umso häufiger, je größer die Eingabe - in dem Fall der zu verarbeitende Code - ist.

Die Herausforderung, Korrektheit garantieren zu müssen, ist insbesondere in sicherheitsrelevanten Systemen sehr wichtig. Ohne eine fundierte Absicherung können derartige Technologien in der Entwicklung solcher Systeme nicht eingesetzt werden.

Damit ein LLM die oben beschriebenen Aufgaben korrekt erfüllen kann, ist ein gewisser Kontext nötig. Dazu gehören beispielsweise Deklarationen der Programmkonstrukte, die in dem entsprechenden Code benutzt werden. Somit reicht es nicht, z.B. nur die betroffene Funktion bereitzustellen - es müssen auch Typ-, Variablen- und sonstigen Deklarationen, die in der Funktion benutzt werden, mitgegeben werden. Das erhöht die benötigte Kontext-Eingabegröße signifikant, möglicherweise um eine Größenordnung. Dadurch kommt das LLM noch schneller an seine Grenzen und kann sich nicht auf den eigentlich relevanten Teil, der häufig nur wenige Zeilen des Codes umfasst, fokussieren. Dadurch nimmt die Fehlerhäufigkeit zu.

Zum anderen enthalten Funktionen häufig komplexe Kontrollkonstrukte (z.B. geschachtelte Schleifen und Verzweigungen), die bei der Prüfung mit formalen Methoden Skalierungsprobleme verursachen. In vielen Fällen kann somit die formale Methode nicht in akzeptabler Zeit (z.B. wenige Minuten) ein Verifikationsergebnis liefern.

### Offenbarung der Erfindung

Gegenstand der Erfindung ist ein Verfahren mit den Merkmalen des Anspruchs 1, ein Computerprogramm mit den Merkmalen des Anspruchs 10, eine Vorrichtung mit den Merkmalen des Anspruchs 11 sowie ein computerlesbares Speichermedium mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Transformieren eines Codes durch ein Sprachmodell (englisch: "Large Language Model"), umfassend die nachfolgenden Schritte:
- Extrahieren eines zu transformierenden Codeausschnittes aus einem Code, wobei der zu transformierende Codeausschnitt manuell oder automatisiert ermittelt wird, z.B. aufgrund eines Fehlers bei einem Ausführen des Codes oder, um ein Refactoring des Codeausschnitts durchzuführen, beispielsweise für eine Verbesserung einer Lesbarkeit oder Wartbarkeit des Codeausschnitts,
- Transformieren des extrahierten Codeausschnittes durch das Sprachmodell, wobei der extrahierte Codeausschnitt im Rahmen des Transformierens beispielsweise hinsichtlich wenigstens einer Eigenschaft wie einer Knappheit oder Wartbarkeit verbessert wird und/oder wenigstens ein Fehler in dem extrahierten Codeausschnitt behoben wird und/oder der extrahierte Codeausschnitt von einer Programmiersprache in eine andere Programmiersprache übersetzt wird,
- Prüfen des transformierten Codeausschnittes auf Basis wenigstens einer definierten Anforderung, wobei vorzugsweise wenigstens ein oder auch mehrere Prüfverfahren durchgeführt werden können, wobei beispielsweise geprüft werden kann, ob ein Fehler des ursprünglichen extrahierten Codeausschnitts immer noch vorliegt und/oder ob der transformierte Codeausschnitt zu einer Fehlermeldung führt und/oder ob der transformierte Codeausschnitt eine gleiche Ausgabe produziert wie der ursprüngliche extrahierte Codeausschnitt,
- Integrieren des transformierten Codeausschnittes in den Code, d.h. insbesondere in den ursprünglichen Code, wenn ein Ergebnis des Prüfens indiziert, dass die wenigstens eine definierte Anforderung erfüllt wird.

Im Rahmen des Extrahierens des zu transformierenden Codeausschnittes aus dem Code werden vorzugsweise nicht einfach z.B. Zeilen extrahiert, die betroffen sind, sondern auch ein jeweils benötigter Kontext. Im Ergebnis muss der extrahierte Codeausschnitt insbesondere den relevanten Code enthalten und übersetzbar sein. Gemäß der Erfindung kann der extrahierte Codeausschnitt somit in eine übersetzbare Form isoliert und separat durch das Sprachmodell transformiert werden. Dies ist insbesondere vorteilhaft, wenn der Code, aus dem der Codeausschnitt extrahiert wird, sehr umfangreich ist. Diese Isolation kann eine gezieltere Bearbeitung und Reduzierung von Fehlern ermöglichen, da der Fokus auf diesem spezifischen Bereich liegt. Das formale Prüfen stellt insbesondere sicher, dass die Transformation der wenigstens einen definierten Anforderung entspricht und korrekten Code generiert. Nur wenn die Prüfung erfolgreich ist, wird vorzugsweise der transformierte Codeausschnitt in den Originalcode integriert, wodurch die Genauigkeit des gesamten Transformationsvorgangs verbessert werden kann.

Die wenigstens eine definierte Anforderung kann beispielsweise eine semantische Konsistenz und/oder Äquivalenz, d.h. insbesondere ein gleiches Verhalten wie der ursprünglich extrahierte Codeausschnitt, eine syntaktische Korrektheit und/oder wenigstens eine regelbasierte Einschränkung des Codes, beispielsweise auf Basis eines Standards oder eines sonstigen Kontextes des Codes, umfassen.

Es kann weiter möglich sein, dass, wenn das Ergebnis des Prüfens indiziert, dass die wenigstens eine definierte Anforderung nicht erfüllt wird, die Schritte des Transformierens und des Prüfens erneut durchgeführt werden, bis das Ergebnis des Prüfens indiziert, dass die wenigstens eine definierte Anforderung erfüllt wird. Somit kann durch wiederholte Ausführung des Transformierens und Prüfens sichergestellt werden, dass der transformierte Codeausschnitt der wenigstens einen definierten Anforderung entspricht. Dies erhöht insbesondere eine Zuverlässigkeit des resultierenden Codes und kann Fehler reduzieren, die durch unzureichende Transformationsergebnisse entstehen könnten.

Auch ist es optional denkbar, dass das jeweils erneut durchgeführte Transformieren ferner den folgenden Schritt umfasst:
- Ermitteln einer Textaufforderung umfassend ein jeweils vorheriges Ergebnis des Transformierens und des Prüfens, wobei auf Basis der Textaufforderung eine Korrektur des jeweils vorherigen Ergebnisses des Transformierens durch das Sprachmodell initiiert wird.

Dadurch wird insbesondere erreicht, dass das Sprachmodell iterativ seine Ausgaben verbessert. Die Kombination aus transformiertem Codeausschnitt und des Ergebnisses des Prüfens kann ferner eine schrittweise Feinabstimmung des Sprachmodells ermöglicht werden. Dies kann zu einer höheren Genauigkeit und Zuverlässigkeit bei dem Transformieren führen.

Zudem ist im Rahmen der Erfindung denkbar, dass das Extrahieren die folgenden Schritte umfasst:
- Ermitteln eines abstrakten Syntaxbaums (englisch: "Abstract Syntax Tree", AST) des Codes,
- Analysieren des ermittelten abstrakten Syntaxbaums, insbesondere im Hinblick auf Kontextinformationen in dem Code für den extrahierten Codeausschnitt,
- Einfügen wenigstens einer Ergänzung in den extrahierten Codeausschnitt auf Basis eines Ergebnisses des Analysierens, insbesondere um die Kontextinformationen bereitzustellen, die eine isolierte Übersetzung, Prüfung und/oder Ausführung des extrahierten Codeausschnitts im Sinne des Codes ermöglichen.

Ein abstrakter Syntaxbaum ist insbesondere eine Datenstruktur, die verwendet werden kann, um einen abstrakten syntaktischen Aufbau von Programmcode darzustellen. Es handelt sich vorzugsweise um eine Baumstruktur, die den Code in einer hierarchischen Form darstellt und kann es ermöglichen, den Code auf einer abstrakten Ebene zu analysieren und zu verarbeiten. Der abstrakte Syntaxbaum wird beispielsweise durch einen Parser eines Compilers oder Interpreters erzeugt und umfasst insbesondere alle Informationen über eine Struktur des Codes, einschließlich der Anordnung von Ausdrücken, Anweisungen und Operatoren.

Optional kann es vorgesehen sein, dass das Analysieren des ermittelten abstrakten Syntaxbaums die folgenden Schritte umfasst:
- Analysieren des abstrakten Syntaxbaums, um Knoten in dem abstrakten Syntaxbaum zu bestimmen, die dem extrahierten Codeausschnitt zugeordnet sind,
- Ermitteln eines Elternknotens der bestimmten Knoten des extrahierten Codeausschnitts,
- Bestimmen von Knoten des abstrakten Syntaxbaums, die unterhalb des Elternknotens vorliegen und nicht zu den bestimmten Knoten des extrahierten Codeausschnitts gehören.

Dadurch wird insbesondere erreicht, dass das Sprachmodell präzise den zu transformierenden Codeausschnitt ermittelt, wodurch das Transformieren qualitativ verbessert werden kann. Die Analyse des abstrakten Syntaxbaums kann es außerdem ermöglichen, den Kontext des zu transformierenden Codeausschnittes besser zu verstehen, was ebenso die Genauigkeit der Transformation verbessern kann.

Auch ist es optional denkbar, dass das Einfügen der wenigstens einen Ergänzung in den extrahierten Codeausschnitt wenigstens einen der folgenden Schritte umfasst:
- Einfügen von künstlich erzeugtem Code, um ein Laufzeitverhalten des extrahierten Codeausschnittes an den Code, d.h. insbesondere den ursprünglichen Code, anzupassen,
- Einfügen von Deklarationen aus dem Code, die den extrahierten Codeausschnitt betreffen.

Dadurch kann der extrahierte Codeausschnitt vorteilhaft präzise an ein ursprüngliches Verhalten in der Umgebung des Codes angepasst werden, sodass das Transformieren durch das Sprachmodell präziser durchgeführt werden kann und eine Analyse durch statische oder dynamische Verfahren ermöglicht wird.

In einer weiteren Möglichkeit kann vorgesehen sein, dass das Verfahren automatisiert durchgeführt wird und die wenigstens eine Anforderung wenigstens eine Anforderung aus einem Standard, insbesondere MISRA-C, umfasst. MISRA C ist insbesondere ein C-Programmierstandard aus der Automobilindustrie, der von der englischen MISRA (Motor Industry Software Reliability Association) erarbeitet wurde. Die Einbeziehung von Standards wie MISRA-C stellt insbesondere sicher, dass der resultierende Code auch gängige Sicherheits- und Qualitätsspezifikationen erfüllt. Dadurch kann die Zuverlässigkeit und Sicherheit des resultierenden Codes verbessert werden.

Ferner kann das Extrahieren auf Basis eines Fehlers in einem technischen System durchgeführt werden. In diesem Fall kann sich die wenigstens eine definierte Anforderung zumindest auf ein Beheben des Fehlers in dem technischen System beziehen. In anderen Worten wird ein entsprechender Codeausschnitt extrahiert, der zu dem Fehler in dem technischen System führt und mit der wenigstens einen definierten Anforderung kann geprüft werden, ob der Fehler behoben wurde.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen

Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, eines technischen Systems, eines Sprachmodells, einer Vorrichtung, eines Speichermediums sowie eines Computerprogramms gemäß Ausführungsbeispielen der Erfindung,
- Fig. 2: eine schematische Darstellung eines abstrakten Syntaxbaums gemäß Ausführungsbeispielen der Erfindung,
- Fig. 3: eine schematische Darstellung eines abstrakten Syntaxbaums gemäß Ausführungsbeispielen der Erfindung,
- Fig. 4: eine schematische Darstellung eines abstrakten Syntaxbaums gemäß Ausführungsbeispielen der Erfindung,
- Fig. 5: eine schematische Darstellung eines abstrakten Syntaxbaums gemäß Ausführungsbeispielen der Erfindung.

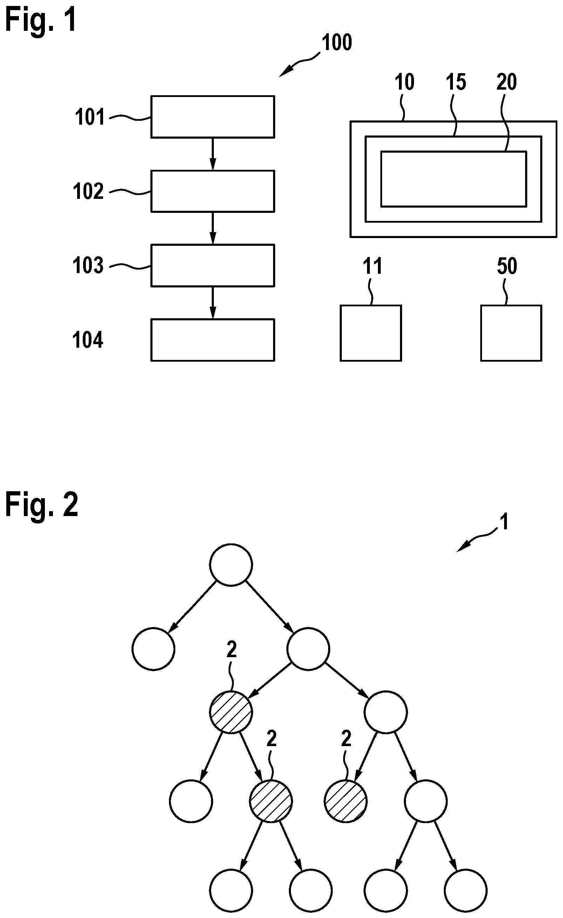

In Fig. 1 sind ein Verfahren 100, ein technisches System 11, ein Sprachmodell 50, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Verfahren 100 zum Transformieren eines Codes durch ein Sprachmodell 50. In einem ersten Schritt 101 wird ein zu transformierender Codeausschnitt aus einem Code extrahiert. In einem zweiten Schritt 102 wird der
extrahierte Codeausschnitt durch das Sprachmodell 50 transformiert. In einem dritten Schritt 103 wird der transformierte Codeausschnitt auf Basis wenigstens einer definierten Anforderung geprüft. In einem vierten Schritt 104 wird der transformierte Codeausschnitt in den Code integriert, wenn ein Ergebnis des Prüfens 103 indiziert, dass die wenigstens eine definierte Anforderung erfüllt wird.

Fig. 2 zeigt ein Bestimmen von Knoten 2 des abstrakten Syntaxbaums 1 zu den relevanten Zeilen des Codes. Eine Menge K umfasst diese bestimmten Knoten 2.

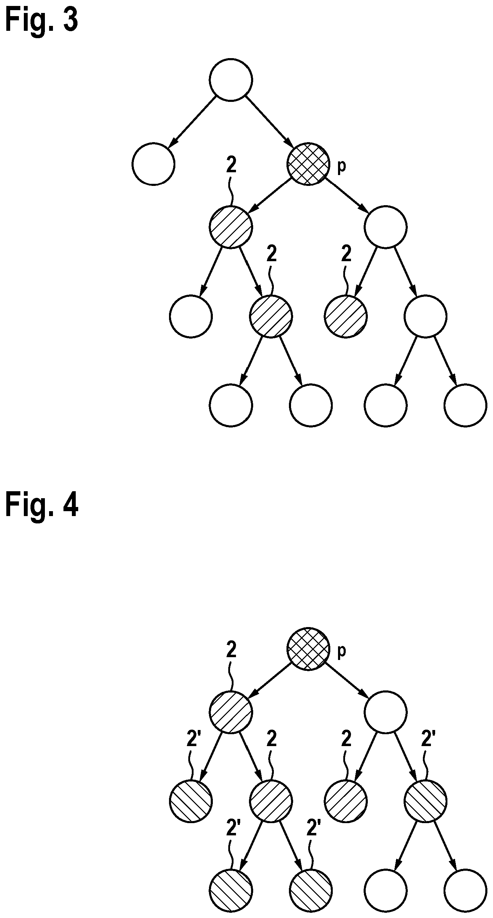

Fig. 3 zeigt ein Ermitteln eines gemeinsamen Elternknotens p der bestimmten Knoten 2.

Fig. 4 zeigt schematisch ein Ermitteln von Knoten 2', deren gesamter Unterbaum nicht in K ist. Eine Menge N umfasst diese Knoten 2'.

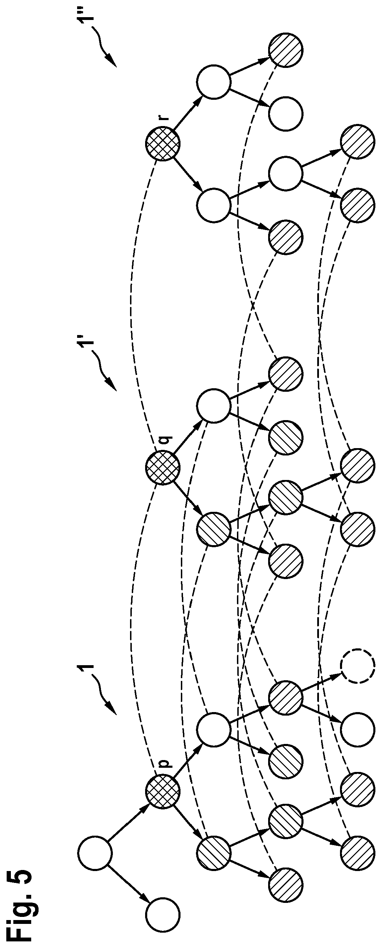

Fig. 5 zeigt Abbildungen zwischen Teilbäumen p und q sowie q und r. p ist insbesondere der Teilbaum des Originalcodes, q ist der Teilbaum des isolierten Codes, und r ist der Teilbaum des transformierten Codes.

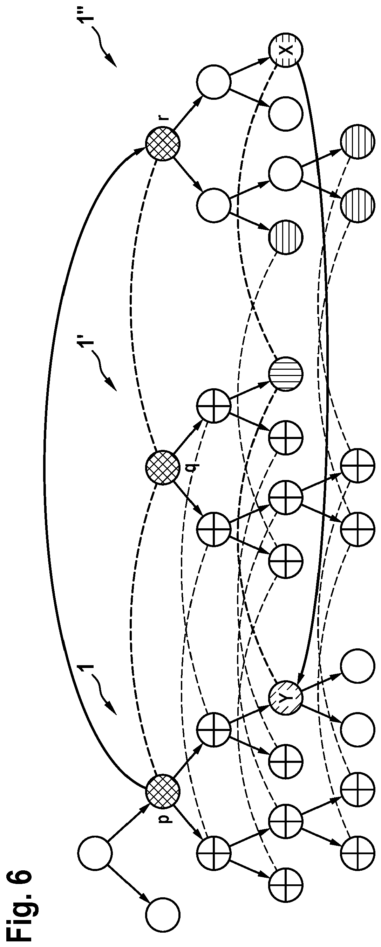

Fig. 6 zeigt ein Ermitteln eines resultierenden Codes anhand der Teilbäume. Hierbei wird insbesondere anstelle von p r eingefügt und an Stelle von x wird y eingefügt. Genauso werden vorzugsweise Knoten aus r durch Teilbäume von p ersetzt (nicht dargestellt).

Auf die Figuren 2 bis 6 wird in der nachstehenden detaillierten Beschreibung nochmal Bezug genommen.

Gemäß Ausführungsbeispielen der Erfindung werden vor der eigentlichen Verarbeitung die für die Änderung relevanten Codeteile isoliert. Dann wird insbesondere die Sprachmodell-basierte Transformation durchgeführt. Ein Ergebnis wird anschließend vorzugsweise auf Basis wenigstens einer definierten Anforderung geprüft, d.h. mittels formaler Methoden abgesichert. Zuletzt wird vorzugsweise die Änderung, d.h. insbesondere der transformierte Codeausschnitt, im Originalcode eingebaut.

Das Problem (sprich: der Code) wird insbesondere auf einen für die Änderung relevanten Codeausschnitt reduziert. Das Sprachmodell kann sich dadurch besser auf diesen Codeausschnitt fokussieren und kann dadurch bessere Ergebnisse bereitstellen. Die formale Methode, d.h. das Prüfen, läuft insbesondere vorteilhaft aufgrund der geringen Komplexität des Codeausschnitt nicht in ein Skalierungsproblem.

Eingangsdaten sind vorzugsweise ein übersetzbarer Code und eine Änderungsaufgabe, die von einem Sprachmodell auf einem bestimmten Teil des Codes, d.h. dem Codeausschnitt, durchgeführt werden soll. Ferner ist vorzugsweise eine formale Methode bzw. ein ausführbares Werkzeug, das diese Methode implementiert, gegeben, die die Qualität des Ergebnisses überprüfen kann.

Die betroffenen Zeilen des Codeausschnittes werden vorzugsweise extrahiert und mittels Analyse des abstrakten Syntaxbaums 1 (AST) des Codes so ergänzt, dass wieder gültiger Code entsteht, der diese Zeilen umfasst. Dafür kann zunächst der abstrakte Syntaxbaum 1 zum gegebenen (Gesamt-) Eingangscode ermittelt werden. Anschließend können Knoten 2 des abstrakten Syntaxbaums 1 bestimmt werden, die zu den Zeilen des Codeausschnittes gehören. Diese bilden insbesondere die Menge K (vgl. Fig. 2).

Anschließend wird vorzugsweise ein (erster) gemeinsamer Elternknoten p aller Knoten in K ermittelt (vgl. Fig. 3), der vorzugsweise eine Anweisung ist (d.h. Ausdrücke bleiben bevorzugt erhalten). Anschließend werden vorzugsweise Knoten 2' des abstrakten Syntaxbaums unterhalb des Elternknotens p bestimmt, ab denen der gesamte Unterbaum nicht in K ist (vgl. Fig. 4). Diese Elemente, bzw. Knoten 2', bilden insbesondere eine Menge N und werden vorzugsweise in einem nachstehend beschriebenen Schritt durch einen künstlich erzeugten Code ersetzt. Danach wird vorzugsweise eine Funktion mit entsprechenden Schnittstellen um den Code generiert, der am Elternknoten p hängt. Danach kann der Code, der zu den Knoten 2 gehört, die an p hängen, jeweils bis zu den Knoten 2' in N eingefügt werden. An deren Stelle wird vorzugsweise jeweils künstlich erzeugter Code eingefügt, der die Erreichung dieser Stelle zur Laufzeit markiert, z.B. durch Setzen einer Variable auf einen eindeutigen konstanten Wert. Ferner können benötigte Deklarationen eingefügt werden, die vor der Funktion im so generierten Code vorkommen.

Danach wird vorzugsweise die Sprachmodell-basierte Transformation auf dem so isolierten extrahierten Codeausschnitt durchgeführt.

Ein Ergebnis der Sprachmodell-basierten Transformation wird anschließend vorzugsweise geprüft. Wenn die Prüfung fehlschlägt, wird dies vorzugsweise an das Sprachmodell 50 zurückgemeldet und eine Korrektur veranlasst. Mit der Antwort des Sprachmodells 50 kann dann erneut die Sprachmodell-basierte Transformation durchgeführt werden.

Wenn das Prüfen erfolgreich war, wird vorzugsweise die Änderung, die das Sprachmodell 50 auf dem isolierten Codeausschnitt vorgenommen hat, auf den Originalcode angewendet, d.h. in diesen integriert. Dabei wird vorzugweise der abstrakte Syntaxbaum 1 der Originalfunktion, der Knoten p, der abstrakte Syntaxbaum 1' der extrahierten Funktion, sowie der abstrakte Syntaxbaum 1" der vom Sprachmodell 50 geänderten Funktion berechnet (vgl. Fig. 5). Ferner wird vorzugsweise ein Knoten q im abstrakten Syntaxbaum 1' ermittelt, der dem Knoten p im abstrakten Syntaxbaum 1 entspricht, sowie ein Knoten r im abstrakten Syntaxbaum 1", der dem Knoten q im abstrakten Syntaxbaum 1' entspricht (vgl. Fig. 5, gelbe Knoten). Dies erfolgt beispielsweise über einen Knotentyp sowie eine Position im abstrakten Syntaxbaum. Anschließend können Gemeinsamkeiten und Unterschiede zwischen den Unterbäumen p und q bestimmt werden (vgl. Fig. 5, linkes Paar). Damit kann eine Abbildung Tba der eingefügten Platzhalter, d.h. des künstlich erzeugten Codes, auf den Originalcode (aus dem abstrakten Syntaxbaum 1) ermittelt werden. Ferner können Gemeinsamkeiten und Unterschiede zwischen den Unterbäumen q und r ermittelt werden (vgl. Fig. 5, rechtes Paar). Damit wird insbesondere eine Abbildung Tcb der Platzhalter im abstrakten Syntaxbaum 1" auf die Platzhalter im abstrakten Syntaxbaum 1' ermittelt. Danach kann der transformierte Code aus dem abstrakten Syntaxbaum 1 durch Traversierung und Unparsing der einzelnen Knoten n unter Anwendung der Funktion Tcb (Tba (n)) generiert werden, sofern diese dort definiert ist (vgl. Fig. 6).

Im Folgenden sei das Verfahren gemäß Ausführungsbeispielen der Erfindung anhand eines Beispiels beschrieben.

Gegeben sei folgender C-Code:

```
void func(unsigned int val) {
         // more code A
         if (val != 0) {
         // more code B
         }
         else {
         // more code C
         }
         // more code D
        }
```

MISRA-C verlangt beispielsweise, dass bei mathematischen Operationen die Typen auf beiden Seiten des Operators gleich sind. Im Beispiel ist val ein unsigned int, das Literal 0 ist aber int (per Default). Um dieses Problem zu beheben, wird vorzugsweise die entsprechende Zeile isoliert. Ausgehend vom Ausdruck val != 0 kann als Knoten p die if-Anweisung ermittelt werden. Als Menge N können der gesamte then-Block sowie der else-Block ("more code B" und "more code C") ermittelt werden. Nun wird vorzugweise eine neue Funktion generiert, die genau diesen Code umfasst:

```
unsigned int val;
       int foo() {
         int ret = 0;
         if (val != 0) {
         ret = 1;
         }
         else {
         ret = 2;
         }
         return ret;
        }
```

Die Anweisungen bzgl. ret werden vorzugsweise für die Knoten in N erzeugt. Sie helfen insbesondere bei der formalen Prüfung, das Verhalten zu charakterisieren. Ferner kann die Deklaration von val erzeugt werden. Die Sprachmodell-basierte Transformation auf diesem Code könnte zu folgendem Ergebnis führen:

```
unsigned int val;
       int foo() {
         int ret = 0;
         if (val ! = Ou) {
         ret = 1;
         }
         else {
         ret = 2;
         }
         return ret;
        }
```

Nun kann geprüft und zu dem Schluss gekommen werden, dass dieser Code das ursprüngliche Problem nicht mehr umfasst. In einem nächsten Schritt kann nun die Codeänderung in den Originalcode eingebaut werden:

```
void func(unsigned int val) {
         // more code A
         if (val != Ou) {
         // more code B
         }
         else {
         // more code C
         }
         // more code D
        }
```

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Transformieren eines Codes durch ein Sprachmodell (50), umfassend die nachfolgenden Schritte:
- Extrahieren (101) eines zu transformierenden Codeausschnittes aus einem Code,
- Transformieren (102) des extrahierten Codeausschnittes durch das Sprachmodell (50),
- Prüfen (103) des transformierten Codeausschnittes auf Basis wenigstens einer definierten Anforderung,
- Integrieren (104) des transformierten Codeausschnittes in den Code, wenn ein Ergebnis des Prüfens (103) indiziert, dass die wenigstens eine definierte Anforderung erfüllt wird.

2. Verfahren (100) nach Anspruch 1,
**dadurch gekennzeichnet,**
**dass**, wenn das Ergebnis des Prüfens (103) indiziert, dass die wenigstens eine definierte Anforderung nicht erfüllt wird, die Schritte des Transformierens (102) und des Prüfens (103) erneut durchgeführt werden, bis das Ergebnis des Prüfens (103) indiziert, dass die wenigstens eine definierte Anforderung erfüllt wird.

3. Verfahren (100) nach Anspruch 2,
**dadurch gekennzeichnet,**
**dass** das jeweils erneut durchgeführte Transformieren (102) ferner den folgenden Schritt umfasst:
- Ermitteln einer Textaufforderung umfassend ein jeweils vorheriges Ergebnis des Transformierens (102) und des Prüfens (103), wobei auf Basis der Textaufforderung eine Korrektur des jeweils vorherigen Ergebnisses des Transformierens (102) durch das Sprachmodell (50) initiiert wird.

4. Verfahren (100) nach einem der vorhergehenden Ansprüche, **dadurch gekennzeichnet,**
**dass** die wenigstens eine definierte Anforderung eine semantische Konsistenz und/oder Äquivalenz, eine syntaktische Korrektheit und/oder wenigstens eine regelbasierte Einschränkung des Codes umfasst.

5. Verfahren (100) nach einem der vorhergehenden Ansprüche, **dadurch gekennzeichnet,**
**dass** das Extrahieren (101) die folgenden Schritte umfasst:
- Ermitteln eines abstrakten Syntaxbaums (1) des Codes,
- Analysieren des ermittelten abstrakten Syntaxbaums (1),
- Einfügen wenigstens einer Ergänzung in den extrahierten Codeausschnitt auf Basis eines Ergebnisses des Analysierens.

6. Verfahren (100) nach Anspruch 5,
**dadurch gekennzeichnet,**
**dass** das Analysieren des ermittelten abstrakten Syntaxbaums (1) die folgenden Schritte umfasst:
- Analysieren des abstrakten Syntaxbaums (1), um Knoten (2) in dem abstrakten Syntaxbaum (1) zu bestimmen, die dem extrahierten Codeausschnitt zugeordnet sind,
- Ermitteln eines Elternknotens (p) der bestimmten Knoten (2) des extrahierten Codeausschnitts,
- Bestimmen von Knoten (2) des abstrakten Syntaxbaums (1), die unterhalb des Elternknotens (p) vorliegen und nicht zu den bestimmten Knoten (2) des extrahierten Codeausschnitts gehören.

7. Verfahren (100) nach Anspruch 5 oder 6,
**dadurch gekennzeichnet,**
**dass** das Einfügen der wenigstens einen Ergänzung in den extrahierten Codeausschnitt wenigstens einen der folgenden Schritte umfasst:
- Einfügen von künstlich erzeugtem Code, um ein Laufzeitverhalten des extrahierten Codeausschnittes an den Code anzupassen,
- Einfügen von Deklarationen aus dem Code, die den extrahierten Codeausschnitt betreffen.

8. Verfahren (100) nach einem der vorhergehenden Ansprüche,
**dadurch gekennzeichnet,**
**dass** das Verfahren (100) automatisiert durchgeführt wird und die wenigstens eine Anforderung wenigstens eine Anforderung aus einem Standard, insbesondere MISRA-C, umfasst.

9. Verfahren (100) nach einem der vorhergehenden Ansprüche,
**dadurch gekennzeichnet,**
**dass** das Extrahieren (101) auf Basis eines Fehlers in einem technischen System (11) durchgeführt wird und sich die wenigstens einer definierten Anforderung zumindest auf ein Beheben des Fehlers in dem technischen System (11) bezieht.

10. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

11. Vorrichtung (10) zur Datenverarbeitung, die eingerichtet ist, das Verfahren (100) nach einem der Ansprüche 1 bis 9 auszuführen.

12. Computerlesbares Speichermedium (15), umfassend Befehle, die bei der Ausführung durch einen Computer (10) diesen veranlassen, die Schritte des Verfahrens (100) nach einem der Ansprüche 1 bis 9 auszuführen.
